# EUROPEAN PATENT APPLICATION

(11) **EP 3 229 131 A1**
(43) Date of publication of application: **11.10.2017**
(21) Application number: 15866313.8
(22) Date of filing: 01.07.2015
(51) Int. Cl.: G06F 9/44

(54) **LINUX SYSTEM-BASED CEN/XFS STANDARD ARCHITECTURE AND IMPLEMENTATION METHOD**

(30) Priority: 03.12.2014 CN 201410728132
(71) Applicant: GRG Banking Equipment Co., Ltd., Guangzhou, Guangdong 510663 (CN)
(72) Inventor: ZHANG, Liepiao, Guangzhou Guangdong 510663 (CN); LIU, Daoyu, Guangzhou Guangdong 510663 (CN); GONG, Wenchuan, Guangzhou Guangdong 510663 (CN); LIANG, Tiancai, Guangzhou Guangdong 510663 (CN)
(74) Representative: Maiwald Patentanwalts GmbH
(86) International application number: PCT/CN2015/083055
(87) International publication number: WO 2016/086655

(57) **Abstract**

Disclosed is a Linux system-based CEN/XFS standard architecture for addressing the technical problem that implementation of a CEN/XFS standard of the Linux system is absent in the prior art. The Linux system-based CEN/XFS standard architecture is suitable for a financial self-service device adopting the CEN/XFS standard; the system of the financial self-service device comprises: an application program layer (100), an XFC management layer (200), an SP layer (300) and a device driver layer (400); the architecture divides the XFC management layer into: a dedicated application layer (201), a universal application layer (202) and a system service layer (203). Also provided is a Linux system-based CEN/XFS standard implementation method for addressing the technical problem that implementation of the CEN/XFS standard of the Linux system is absent in the prior art.

## Description

This application claims the priority to Chinese Patent Application No. 201410728132.6, titled "LINUX SYSTEM-BASED CEN/XFS STANDARD ARCHITECTURE AND IMPLEMENTATION METHOD" and filed with the Chinese State Intellectual Property Office on December 3, 2014, which is incorporated herein by reference in its entirety.

### FIELD

The present disclosure relates to the technical field of a financial self-service device, and particularly to a Linux system-based CEN/XFS standard architecture and an implementation method for a Linux system-based CEN/XFS standard.

### BACKGROUND

Most software in an ATM operates on the Windows system currently, and only a few of software in an ATM operates on the Linux system. A financial service organization issued the WOSA/XFS version 2.0 standard on February 11, 1996, and handed over the standard to the European Committee for Standardization (CEN) on May 11, 1998 in Brussels, Belgium. Shenzhen ZIJIN has become a core member of the Organization as a first Chinese corporation. According to the latest information, the WOSA/XFS workgroup of the CEN has published ver3.0 standard. The WOSA/XFS protocol is also referred to as the CEN/XFS protocol. The Windows Open System Architecture (abbreviated as WOSA) is a software architecture proposed by the Microsoft Corporation based on the Windows operating system, and WOSA/XFS (Windows Open System Architecture/Extensions for Financial Services) is extensions for financial services based on the WOSA. The WOSA/XFS is a software architecture proposed by the Microsoft Corporation for software in the global financial industry, in which, some modifications are made on the WOSA software architecture with respect to the global financial industry.

Many experts keep warning over years that the Windows system is not safe enough for bank services because of, for example, forcing automatic upgrades and updates without inquiring, being vulnerable to remotely monitoring at any time and even stealing information. However, there is no program or software implementing the CEN/XFS protocol on the Linux system at present. It is necessary or even obligatory to develop a Linux system-based ATM. In addition, since the Linux system has been applied into most fields, the Linux system is developed as well as the windows system. A prime consideration for developing system application software in the Linux system-based ATM is to implement the CEN/XFC protocol on the Linux system. Therefore, an urgent problem to be solved by those skilled in the art is that the CEN/XFS standard of the Linux system is absent in the conventional technology.

### SUMMARY

A Linux system-based CEN/XFS standard architecture and an implementation method for a Linux system-based CEN/XFS standard are provided according to the embodiments of the present disclosure, for addressing the technical problem that implementation for the CEN/XFS standard on the Linux system is absent in the conventional technology.

A Linux system-based CEN/XFS standard architecture is provided according to an embodiment of the present disclosure, which is applied to a financial self-service device adopting a CEN/XFS standard. A system of the financial self-service device includes an application program layer, an XFS management layer, an SP layer and a device drive layer. In the architecture, the XFC management layer is divided into: a dedicated application layer interactively connected with the application program layer via an API interface and used for calling an SPI interface with the SP layer and forwarding an operation instruction of the application program layer by calling interfaces of a universal application layer and a system service layer; the universal application layer used for receiving an event message of the SP layer and providing the dedicated application layer with an interface for receiving an event message and transmitting an event message; and the system service layer used for implementing system services of log management, registry management, memory management, thread management and communication management and providing interfaces to the dedicated application layer and the universal application layer.

Optionally, the universal application layer is further used for directly transmitting the event message from the SP layer to the application program layer.

Optionally, the system service of log management is used for providing log record and log maintenance, the system service of registry management is used for reading configuration information, the system service of memory management is used for managing memory, the system service of thread management is used for supporting multi-application mutual exclusion access, the system service of communication management is used for uniformly managing semaphore and a message handler.

Optionally, the system service of registry management is used for reading the configuration information in a manner of reading a TingXml file, and the system service of memory management is used for managing sequential memory allocation and chained memory allocation.

Optionally, the universal application layer is used for providing the dedicated application layer with the interface for receiving an event message and transmitting an event message in a function callback manner. Alternatively, the universal application layer is used for providing the dedicated application layer with the interface for receiving an event message and transmitting an event message in an inter-process communication manner or an inter-thread communication manner of Linux system.

An implementation method for a Linux system-based CEN/XFS standard is provided according to an embodiment of the present disclosure, the implementation method is applied into the Linux system-based CEN/XFS standard architecture according to claim 1. The implementation method includes: S01, calling the SPI interface with the SP layer by the dedicated application layer; S02, calling, by the dedicated application layer, the log management of the system service layer, to record a log that the SPI interface is called; S03, determining whether a called command is a synchronous command or an asynchronous command by the dedicated application layer based on a called function name of the application program layer , turning to step S04 in a case of the synchronous command, and unlocking and returning by the dedicated application layer in a case of the asynchronous command; S04, receiving, by the universal application layer, an event message returned from the SP layer; S05, returning the event message to the dedicated application layer by the universal application layer; S06, returning the event message to the application program layer by the dedicated application layer through an output parameter; and S07, unlocking and returning by the dedicated application layer.

Optionally, before step S01, the implementation method further includes: locking, by the dedicated application layer, by calling the thread management of the system service layer; acquiring the called command by the dedicated application layer through an input parameter of a call interface of the application program layer, where a name of the called command is the called function name; reading, by the dedicated application layer, configuration information by calling registry management of the system service layer; calling, by the dedicated application layer, the log management of the system service layer, to record a log that a function interface is called; and initializing, by the universal application layer, a message handler by calling thread management of the system service layer, or registering, by the universal application layer, a callback class with the SP layer.

Optionally, in a case of the asynchronous command in step S03, the implementation method further includes: S031, receiving by the universal application layer the event message returned from the SP layer; and S032, transmitting the event message to the application program layer by the universal application layer.

Optionally, the step S04 or S031 includes: registering with the device drive layer by the universal application layer on initialization, to register a pointer of an interface class of the module with the device drive layer, where the interface class inherits from an interface virtual base class of the device drive layer; calling a member function of the interface virtual base class in a case that an event message is generated by the SP layer 300, where a parameter of the member function includes message structural data or event structural data; and taking the message structural data or the event structural data to the universal application layer through the parameter of the member function, where the event message returned from the SP layer is received by the universal application layer.

Optionally, the steps S04 and S05 includes: initializing, by the universal application layer on initialization, a message handler by calling the communication management of the system service layer, to create a message queue; delivering an ID of the message queue to the SP layer through a parameter by the universal application layer in a case that the dedicated application layer calls the SPI interface with the SP layer; transmitting the message structural data or the event structural data to the dedicated application layer by a message queue API function built into the Linux system in a case that the event message is generated by the SP layer, to acquire the event message by the dedicated application layer. Steps S031 and S032 includes: initializing a message handler by calling the communication management of the system service layer by the universal application layer on initialization, to create a message queue; delivering an ID of the message queue to the SP layer through a parameter by the universal application layer in a case that the dedicated application layer calls the SPI interface with the SP layer; transmitting the message structural data or the event structural data to the application program layer by a message queue API function built into the Linux system in a case that the event message is generated by the SP layer, to acquire the event message by the application program layer.

It can be seen from the above technical solution that the embodiments of the present disclosure have the following advantages.

In the embodiments of the present disclosure, the Linux system-based CEN/XFS standard architecture is applicable to the financial self-service device adopting the CEN/XFS standard. The system of the financial self-service device includes the application program layer, the XFS management layer, the SP layer and the device drive layer. In the architecture, the XFS management layer is divided into: the dedicated application layer interactively connected with the application program layer via an API interface and used for calling the SPI interface with the SP layer and forwarding an operation instruction of the application program layer by calling the interfaces of the universal application layer and the system service layer; the universal application layer used for receiving an event message of the SP layer and providing the dedicated application layer with the interface for receiving an event message and transmitting an event message; and the system service layer used for implementing the system services of log management, registry management, memory management, thread management and communication management and providing the interfaces to the dedicated application layer and the universal application layer. In the embodiments of the present disclosure, with the Linux system-based CEN/XFS standard architecture in which the XFS management layer is divided into the dedicated application layer, the universal application layer and the system service layer, for implementing corresponding functions, a foundation is established for running a program or software of the CEN/XFS protocol on the Linux system in the financial self-service device, which addresses the technical problem that implementation for the CEN/XFS standard on the Linux system is absent in the conventional technology.

### BRIEF DESCRIPTION OF THE DRAWINGS

Figure 1 is a schematic structural diagram of a system of a financial self-service device;
Figure 2 is schematic structural diagram of a Linux system-based CEN/XFS standard architecture according to an embodiment of the present disclosure;
Figure 3 is a schematic diagram of an implementation method for a Linux system-based CEN/XFS standard according to an embodiment of the present disclosure; and
Figure 4 is a schematic interaction diagram of an implementation method for a Linux system-based CEN/XFS standard.

### DETAILED DESCRIPTION

A Linux system-based CEN/XFS standard architecture and an implementation method for a Linux system-based CEN/XFS standard are provided according to the embodiments of the present disclosure, for addressing the technical problem that implementation for the CEN/XFS standard on the Linux system is absent in the conventional technology.

In order to make an invention objective, features and advantages of the present disclosure clearer and easier to be understood, the technical solution in the embodiments of the present disclosure is described clearly and completely below in conjunction with the drawings in the embodiments of the present disclosure. Obviously, the embodiments described below are only a part rather than all of the embodiments of the present disclosure. Based on the embodiments of the present disclosure, all other embodiments obtained by those skilled in the art without creative work will fall within the scope of protection of the present disclosure.

### First embodiment

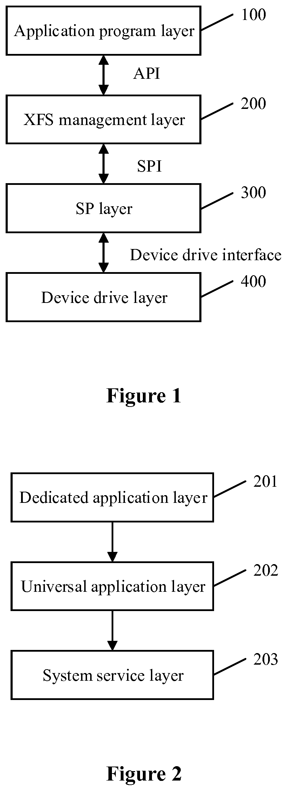

A Linux system-based CEN/XFS standard architecture is provided according to the present disclosure, for implementing the CEN/XFS standard to a financial industry self-service device on the Linux system. Service Provider (abbreviated as SP) provided by a manufacturer of the financial industry self-service device meets the CEN/XFS standard. In order to shield differences in hardware provided by various manufacturers of the financial industry self-service devices, the CEN/XFS standard specifies a uniform service provider interface, abbreviated as SPI, which should be provided by each manufacturer of the financial industry self-service devices, and a uniform application interface, abbreviated as API, which should be called by each application program of the financial industry self-service devices. The SPI and the API interact with each other via an XFS management layer (XFS MANAGER) provided in the CEN/XFS. Therefore, as shown in Figure 1, the financial industry self-service device includes an application program layer 100, an XFS management layer 200, an SP layer 300 and a device drive layer 400. The application program layer 100 is connected with the XFS management layer 200 via the application program interface (API), the XFS management layer is connected with the SP layer 300 via the SPI, and the SP layer 300 is connected with the device drive layer 400 via a device drive interface.

With reference to Figure 2, in the Linux system-based CEN/XFS standard architecture, the XFS management layer has a three-layer structure, which includes a dedicated application layer 201, a universal application layer 202 and a system service layer 203 from the top down.
(1) The dedicated application layer 201, as an interface layer of the CEN/XFS standard, is interactively connected with the upper application program layer via an application program interface API and is used for calling an SPI interface with the SP layer and forwarding an operation instruction of the application program layer by calling interfaces of the universal application layer 202 and the system service layer 203.
(2) The universal application layer 202 is used for receiving an event message from the SP layer, and providing the dedicated application layer 201 with an interface for receiving an event message and transmitting an event message.
   Preferably, the universal application layer 202 is further used for directly transmitting the event message from the SP layer to the application program layer.
(3) The system service layer 203 is used for implementing system services of log management, registry management, memory management, thread management and communication management, and providing interfaces to the dedicated application layer 201 and the universal application layer 202.

The system service of log management may be used for providing log record and log maintenance.

The system service of registry management may be used for reading the configuration information, and particularly, the system service of registry management may also be used for reading the configuration information in a manner of reading a TingXml file.

The system service of memory management may be used for managing memory, particularly including sequential memory allocation and chained memory allocation.

The system service of thread management may be used for supporting multi-application mutual exclusion access.

The system service of communication management may be used for performing uniform management for semaphore and a message handler.

Optionally, the interface for receiving an event message and transmitting an event message provided by the universal application layer 202 to the dedicated application layer 201 may be implemented in a function callback manner.

Optionally, the interface for receiving an event message and transmitting an event message provided by the universal application layer 202 to the dedicated application layer 201 may be implemented in an inter-process communication manner or an inter-thread communication manner of the Linux system.

In the embodiment, the Linux system-based CEN/XFS standard architecture is applicable to the financial self-service device adopting the CEN/XFS standard. A system of the financial self-service device includes the application program layer, the XFS management layer, the SP layer and the device drive layer. In the architecture, the XFS management layer is divided into: the dedicated application layer 201 interactively connected with the application program layer via an API interface and used for calling the SPI interface with the SP layer and forwarding an operation instruction of the application program layer by calling the interfaces of the universal application layer 202 and the system service layer 203; the universal application layer 202 used for receiving an event message of the SP layer and providing the dedicated application layer 201 with an interface for receiving an event message and transmitting an event message; and the system service layer 203 used for implementing system services of log management, registry management, memory management, thread management and communication management and providing interfaces to the dedicated application layer 201 and the universal application layer 202. In the embodiments, with the Linux system-based CEN/XFS standard architecture in which the XFS management layer is divided into the dedicated application layer 201, the universal application layer 202 and the system service layer 203 for implementing corresponding functions, a foundation is established for running a program or software of the CEN/XFS protocol on the Linux system in the financial self-service device, which addresses the technical problem that implementation for the CEN/XFS standard on the Linux system is absent in the conventional technology.

### Second embodiment

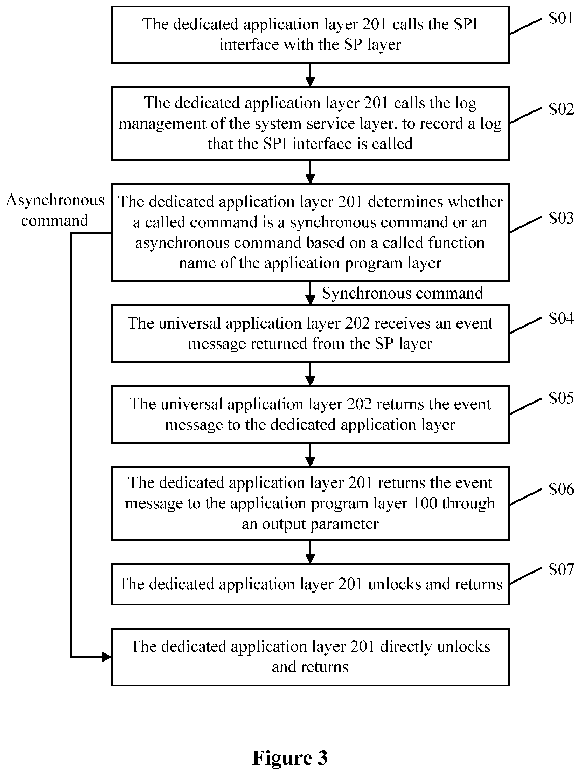

An implementation method for a Linux system-based CEN/XFS standard is provided according to an embodiment of the present disclosure, with reference to Figure 1, Figure 2 and Figure 3, the implementation method according to the embodiment includes steps S01 to S07.

In S01, the dedicated application layer 201 calls the SPI interface with the SP layer.

In S02, the dedicated application layer 201 calls the log management of the system service layer, to record a log that the SPI interface is called.

In S03, the dedicated application layer 201 determines whether a called command is a synchronous command or an asynchronous command based on a called function name of the application program layer. Step S04 is performed in a case of the synchronous command, and the dedicated application layer 201 directly unlocks and returns in a case of the asynchronous command.

In S04, the universal application layer 202 receives an event message returned from the SP layer.

In S05, the universal application layer 202 returns the event message to the dedicated application layer 201.

In S06, the dedicated application layer 201 returns the event message to the application program layer 100 through an output parameter.

In S07, the dedicated application layer 201 unlocks and returns.

In the embodiment, with the implementation method for a Linux system-based CEN/XFS standard in which the XFS management layer is divided into the dedicated application layer, the universal application layer and the system service layer for implementing corresponding functions, a foundation is established for running a program or software of the CEN/XFS protocol on the Linux system in the financial self-service device, which addresses the technical problem that implementation for the CEN/XFS standard on the Linux system is absent in the conventional technology.

### Third embodiment

For better understanding, a whole processing flow of an implementation method for a Linux system-based CEN/XFS standard is described in detail below. With reference to Figure 1, Figure 2 and Figure 4, another embodiment includes contents as follows.

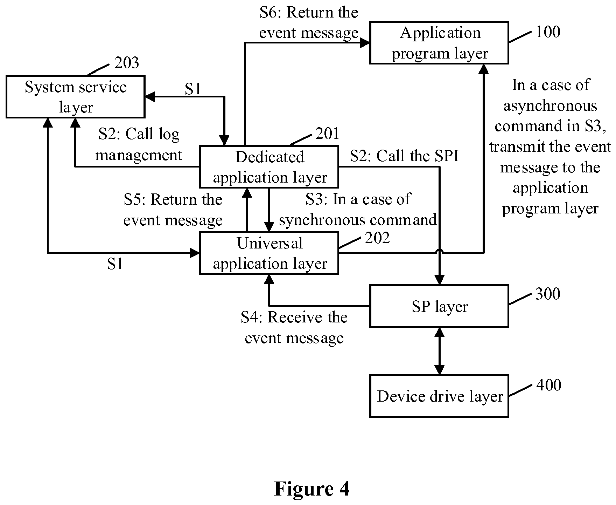

Figure 4 is a schematic interaction diagram of an implementation method of a Linux system-based CEN/XFS standard. As shown in Figure 4, the implementation method includes steps S1 to S7.

S1 includes locking, analyzing a command, reading configuration information, recording a log, initializing a message handler, registering a callback class with the SP layer, or the like.

In S2, the dedicated application layer 201 calls the SPI interface with the SP layer, to forward the command; and the dedicated application layer 201 calls the log management of the system service layer 203, to record a log that the SPI interface is called.

In S3, the dedicated application layer 201 determines whether a called command is a synchronous command or an asynchronous command based on a called function name of the application program layer 100. Step S4 is performed in a case of the synchronous command, and the dedicated application layer 201 unlocks and returns in a case of the asynchronous command.

In S4, the universal application layer 202 receives an event message returned from the SP layer 300.

In S5, the universal application layer 202 returns the event message to the dedicated application layer 201.

In S6, the dedicated application layer 201 returns the event message to the application program layer 100 through an output parameter.

In S7, the dedicated application layer 201 unlocks and returns.

It should be noted that step S1 may further includes steps S11 to S 15 in an actual implementation process.

In S11, the dedicated application layer 201 locks by calling thread management of the system service layer 203.

In S12, the dedicated application layer 201 acquires a called command through an input parameter of a call interface of the application program layer 100. A name of the called command is the called function name.

In S13, the dedicated application layer 201 reads configuration information by calling registry management of the system service layer 203.

In S 14, the dedicated application layer 201 calls the log management of the system service layer 203, to record a log that a function interface is called.

In S 15, the universal application layer 202 initializes a message handler by calling thread management of the system service layer 203, or registries a callback class with the SP layer 300.

It should be noted that in a case of the asynchronous command in step S3, the implementation method further includes steps S31 to S32 in an actual implementation process.

In S31, the universal application layer 202 receives an event message returned from the SP layer 300.

In S32, the universal application layer 202 transmits the event message to the application program layer 100.

In addition, the universal application layer 202 receives the event message returned from the SP layer 300 in both step S4 and S31 in the embodiment, which may be implemented in two ways in practice. Any one of the two ways may be selected.

A first way is a C++ callback way, which includes steps S41 to S43.

In S41, the universal application layer 202 registers with the device drive layer 400 on initialization. That is, the universal application layer 202 registers a pointer of an interface class (the interface class inherits from an interface virtual base class of the device drive layer) of the module with the device drive layer 300.

In S42, in a case that an event message is generated by the SP layer 300, a member function of the interface virtual base class is called. The member function is implemented by the interface class of the universal application layer 202. A parameter of the member function includes message structural data or event structural data.

In S43, the data is taken to the universal application layer 202 through the parameter of the member function, and the universal application layer 202 receives the event message returned from the SP layer 300.

A second way is an inter-process communication way or an inter-thread communication way of the Linux system. In this way, the interface of the universal application layer 202 directly calls the inter-process communication mechanism or the inter-thread communication mechanism of the Linux system, including a message queue, process sharing, pipe, socket and other communication mechanisms. Taking the message queue as an example, the second way is described with steps S44 to S46.

In S44, the universal application layer 202 initializes a message handler on initialization by calling the communication management of the system service layer 203, to create a message queue.

In S45, in a case that the dedicated application layer 201 calls the SPI interface with the SP layer 300, the universal application layer 202 delivers an ID of a message queue to the SP layer 300 through a parameter.

In S46, in a case that an event message is generated by the SP layer 300, the message structural data or the event structural data is transmitted to the dedicated application layer 201 or the application program layer 100 by a message queue API function built into the Linux system, so that the event message is acquired by the dedicated application layer 201 or the application program layer 100.

Furthermore, the two ways described above are packaged, to provide a uniform interface to the dedicated application layer 201. The interface is used for receiving and transmitting data, while shielding implementation details from the dedicated application layer 201.

In summary, the Linux system-based CEN/XFS standard architecture and the implementation method for a Linux system-based CEN/XFS standard are provided according to the present disclosure, to implement the CEN/XFS standard on the Linux system through the functional division and cooperation in the three-layer structure.

It may be clearly understood by those skilled in the art that, for a convenient and concise description, reference may be made to the corresponding processes in the above method embodiment for details of operating processes of the system, the apparatus and the unit described above, which are not repeated herein.

In several embodiments according to the present disclosure, it should be understood that the disclosed system, device and method can be implemented in other ways. The device embodiments described above are merely schematic. For example, the division of units is merely a logic functional division, and there may be other division manners in practice. For example, multiple units or components may be combined, or may be integrated into another system, or some features may be ignored, or not be executed. In addition, the coupling, direct coupling or communication connection between components shown or discussed may be indirect coupling or communication connection via some interfaces, devices or units, which may be electrical, mechanical, or in other form.

The units illustrated as separate components may be or may not be separated physically, and the component displayed as a unit may be or may not be a physical unit. That is, the components may be located at the same place, or may be distributed on multiple network units, and some or all of the units may be selected as required, to realize the objective of the solution of the embodiments.

In addition, each function unit according to each embodiment of the present application may be integrated into one processing unit, or may be a separate unit physically, or two or more units are integrated into one unit. The integrated unit described above may be realized in hardware, or may be realized by a software function unit.

The integrated unit may be stored in a computer readable storage medium if the integrated unit is implemented in a software function unit and sold or used as a separate product. Base on such understanding, the essential part of the technical solution of the present disclosure or the part of the technical solution of the present disclosure contributed to the conventional technology or all of or a part of the technical solution may be embodied in a software product way. The computer software product is stored in a storage medium, which includes several instructions to make a computer device (may be a personal computer, a server, a network device or the like) execute all or a part of steps of the method according to each embodiment of the present application. The storage medium described above includes various mediums, which can store program codes, such as a USB disk, a mobile hard disk, a read-only memory (ROM), a random access memory (RAM), a disk and a compact disc.

The foregoing embodiments are only described for illustrating the technical solution of the present disclosure, and not for limiting the technical solution. Although the present disclosure is illustrated in detail with reference to the embodiments described above, it should be understood by those skilled in the art that modification can be made to the technical solution recited in the embodiments described above, or equivalent substitution can be made on a part of technical features of the technical solution. The modification and equivalent substitution cannot make essence of the technical solution depart from spirit and scope of the technical solution according to the embodiments of the present disclosure.

## Claims

1. A Linux system-based CEN/XFS standard architecture applied to a financial self-service device adopting a CEN/XFS standard, wherein a system of the financial self-service device comprises an application program layer, an XFS management layer, an SP layer and a device drive layer; in the architecture, the XFS management layer is divided into:
a dedicated application layer, interactively connected with the application program layer via an API interface and used for calling an SPI interface with the SP layer and forwarding an operation instruction of the application program layer by calling interfaces of a universal application layer and a system service layer;
the universal application layer, used for receiving an event message of the SP layer and providing the dedicated application layer with an interface for receiving an event message and transmitting an event message; and
the system service layer, used for implementing system services of log management, registry management, memory management, thread management and communication management and providing interfaces to the dedicated application layer and the universal application layer.

2. The architecture according to claim 1, wherein the universal application layer is further used for directly transmitting the event message from the SP layer to the application program layer.

3. The architecture according to claim 1, wherein
the system service of log management is used for providing log record and log maintenance;
the system service of registry management is used for reading configuration information;
the system service of memory management is used for managing memory;
the system service of thread management is used for supporting multi-application mutual exclusion access; and
the system service of communication management is used for uniformly managing semaphore and a message handler.

4. The architecture according to claim 3, wherein
the system service of registry management is used for reading the configuration information in a manner of reading a TingXml file; and
the system service of memory management is used for managing sequential memory allocation and chained memory allocation.

5. The architecture according to any one of claims 1 to 4, wherein
the universal application layer is used for providing the dedicated application layer with the interface for receiving an event message and transmitting an event message in a function callback manner; or
the universal application layer is used for providing the dedicated application layer with the interface for receiving an event message and transmitting an event message in an inter-process communication manner or an inter-thread communication manner of Linux system.

6. An implementation method for a Linux system-based CEN/XFS standard, applied to the Linux system-based CEN/XFS standard architecture according to claim 1, wherein the implementation method comprises:
S01, calling, by the dedicated application layer, the SPI interface with the SP layer;
S02, calling, by the dedicated application layer, the log management of the system service layer, to record a log that the SPI interface is called;
S03, determining, by the dedicated application layer, whether a called command is a synchronous command or an asynchronous command based on a called function name of the application program layer, turning to step S04 in a case of the synchronous command, and unlocking and returning by the dedicated application layer in a case of the asynchronous command;
S04, receiving, by the universal application layer, an event message returned from the SP layer;
S05, returning, by the universal application layer, the event message to the dedicated application layer;
S06, returning, by the dedicated application layer, the event message to the application program layer through an output parameter; and
S07, unlocking and returning by the dedicated application layer.

7. The implementation method according to claim 6, wherein before the step S01, the implementation method further comprises:
locking, by the dedicated application layer, by calling the thread management of the system service layer;
acquiring, by the dedicated application layer, the called command through an input parameter of a call interface of the application program layer, wherein a name of the called command is the called function name;
reading, by the dedicated application layer, configuration information by calling the registry management of the system service layer;
calling, by the dedicated application layer, the log management of the system service layer, to record a log that a function interface is called; and
initializing, by the universal application layer, a message handler by calling the thread management of the system service layer, or registering, by the universal application layer, a callback class with the SP layer.

8. The implementation method according to claim 7, wherein in a case of the asynchronous command in step S03, the implementation method further comprises:
S031, receiving, by the universal application layer, the event message returned from the SP layer; and
S032, transmitting, by the universal application layer, the event message to the application program layer;

9. The implementation method according to claim 8, wherein the step S04 or S031 comprises:
registering with the device drive layer by the universal application layer on initialization, to register a pointer of an interface class of the module with the device drive layer, wherein the interface class inherits from an interface virtual base class of the device drive layer;
calling a member function of the interface virtual base class in a case that an event message is generated by the SP layer 300, wherein a parameter of the member function comprises message structural data or event structural data; and
taking the message structural data or the event structural data to the universal application layer through the parameter of the member function, wherein the event message returned from the SP layer is received by the universal application layer.

10. The implementation method according to claim 8, wherein
the steps S04 and S05 comprises:
initializing, by the universal application layer on initialization, a message handler by calling the communication management of the system service layer, to create a message queue;
delivering, by the universal application layer, an ID of the message queue to the SP layer through a parameter in a case that the dedicated application layer calls the SPI interface with the SP layer; and
transmitting the message structural data or the event structural data to the dedicated application layer by a message queue API function built into the Linux system in a case that the event message is generated by the SP layer, to acquire the event message by the dedicated application layer,
the steps S031 and S032 comprises:
initializing, by the universal application layer on initialization, a message handler by calling the communication management of the system service layer, to create a message queue;
delivering, by the universal application layer, an ID of the message queue to the SP layer through a parameter in a case that the dedicated application layer calls the SPI interface with the SP layer; and
transmitting the message structural data or the event structural data to the application program layer by a message queue API function built into the Linux system in a case that the event message is generated by the SP layer, to acquire the event message by the application program layer.
